# EUROPEAN PATENT SPECIFICATION

(11) **EP 4 358 251 B1**
(45) Date of publication and mention of the grant of the patent: **12.03.2025**
(21) Application number: 23201244.3
(22) Date of filing: 02.10.2023
(51) Int. Cl.: H01M 50/209, H01M 50/264

(54) **BATTERY MODULE**
BATTERIEMODUL
MODULE DE BATTERIE

(30) Priority: 20.10.2022 JP 2022168089
(43) Date of publication of application: 24.04.2024
(73) Proprietor: Prime Planet Energy & Solutions, Inc., Chuo-ku Tokyo 103-0022 (JP)
(72) Inventor: TSUDA, Yoshihiro, Tokyo, 103-0022 (JP); TERANAKA, Tomochika, Tokyo, 103-0022 (JP)
(74) Representative: Kuhnen & Wacker Patent- und Rechtsanwaltsbüro PartG mbB

(56) References cited:
- EP-A1- 4 050 713
- EP-A2- 2 362 463
- WO-A1-2021/199493
- WO-A1-2022/213728
- US-A1- 2012 141 855

## Description

### BACKGROUND OF THE INVENTION

### Field of the Invention

The present technology relates to a battery module.

### Description of the Background Art

As indicated in Japanese Patent Laying-Open No. 2019-220419, it has been conventionally practiced to form an end plate using a plate-shaped member and to fix the end plate by a bolt. WO 2021/199493 A1, EP 4 050 713 A1, and WO 2022/213728 A1 disclose battery modules comprising a stack of prismatic battery cells. End plates and restraint members enclose the stack. Each of the end plates includes a plate-shaped member having an abutment portion and a recess. The recess has a flat bottom surface and a portion having an uneven shape. US 2012/141855 A1 and EP 2 362 463 A2 further battery modules.

### SUMMARY OF THE INVENTION

It is required to secure a region for a flat surface portion of a plate-shaped member to facilitate fastening thereof to a restraint member (binding bar) while satisfying a demand for size reduction of a battery module.

It is an object of the present technology to provide a battery module to maintain strength and attain a reduced size.

The present technology provides a battery module comprising: a stack including a plurality of battery cells arranged side by side in a first direction, each of the plurality of battery cells having a prismatic shape; an end plate provided to be arranged side by side with the plurality of battery cells in the first direction; and a restraint member that restrains the plurality of battery cells and the end plate along the first direction, the restraint member being provided to be arranged side by side with the plurality of battery cells and the end plate in a second direction orthogonal to the first direction, wherein the end plate includes a plate-shaped member, the plate-shaped member has an uneven shape including an abutment portion and a recess, the abutment portion being in abutment with the stack in the first direction, the recess being located in a direction away from the stack with respect to the abutment portion, the recess includes a first portion and a second portion, the first portion having a flat surface shape, the first portion constituting a bottom surface of the recess, the second portion having been through a process for forming the uneven shape, and a pressing process has been performed onto the plate-shaped member at a region overlapping with the second portion having been through the process for forming the uneven shape when viewed in the first direction so as to form a pressing-processed portion continuous to the first portion and expanding the first portion.

The end plate may include a fastening portion that is provided in the first portion and that is fastened to the restraint member.

The fastening portion may be provided to be located at each of both end portions of the end plate in the second direction.

The abutment portion and the recess may be formed to each extend in the second direction and to be adjacent to each other along a third direction orthogonal to the first direction and the second direction.

Each of widths of the abutment portion and the recess in the third direction may be changed along the second direction, and the pressing process may have been performed onto the abutment portion at a portion having a relatively narrow width in the third direction.

The battery module may further comprise a case that accommodates the plurality of battery cells, that supports the plurality of battery cells in at least the first direction, and that forms a unit including the plurality of battery cells.

The unit may include two or more battery cells, and each of the two or more battery cells may have an output density of 8000 W/L or more.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module.
Fig. 2 is an exploded assembly diagram showing the battery module.
Fig. 3 is a perspective view showing a battery cell unit included in the battery module.
Fig. 4 is a perspective view showing a battery cell included in the battery cell unit.
Fig. 5 is a side view showing surroundings around abutment portions between an end plate and the battery cell unit.
Fig. 6 is a first perspective view showing the end plate.
Fig. 7 is a second perspective view showing the end plate.
Fig. 8 is a perspective view showing a plate-shaped member included in the end plate.
Fig. 9 is a front view showing the plate-shaped member included in the end plate.
Fig. 10 is an enlarged view of surroundings around a fastening hole.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

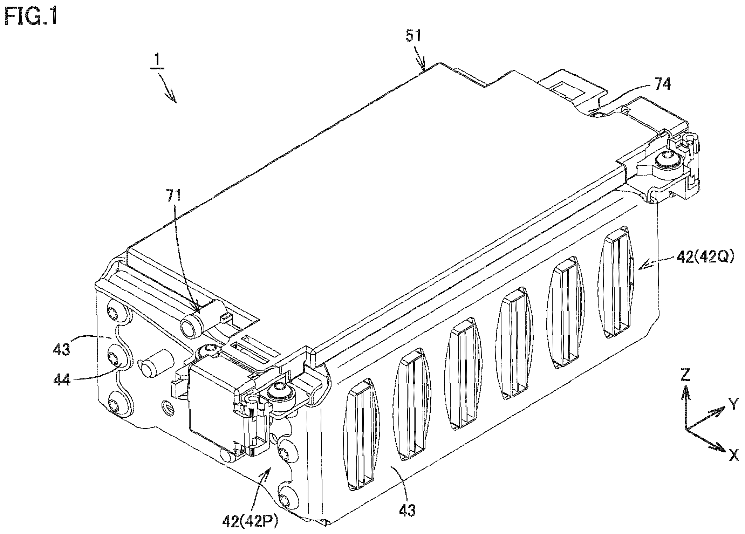

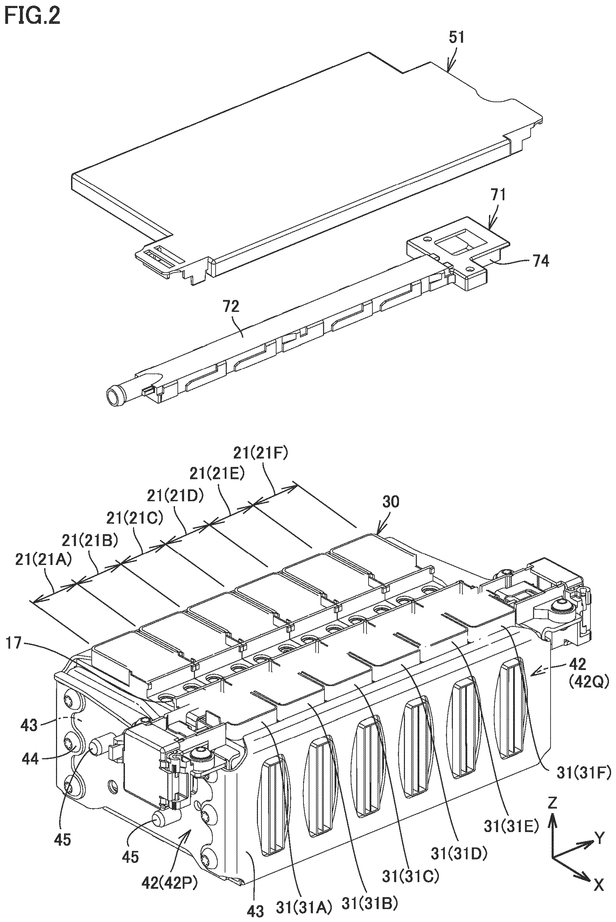

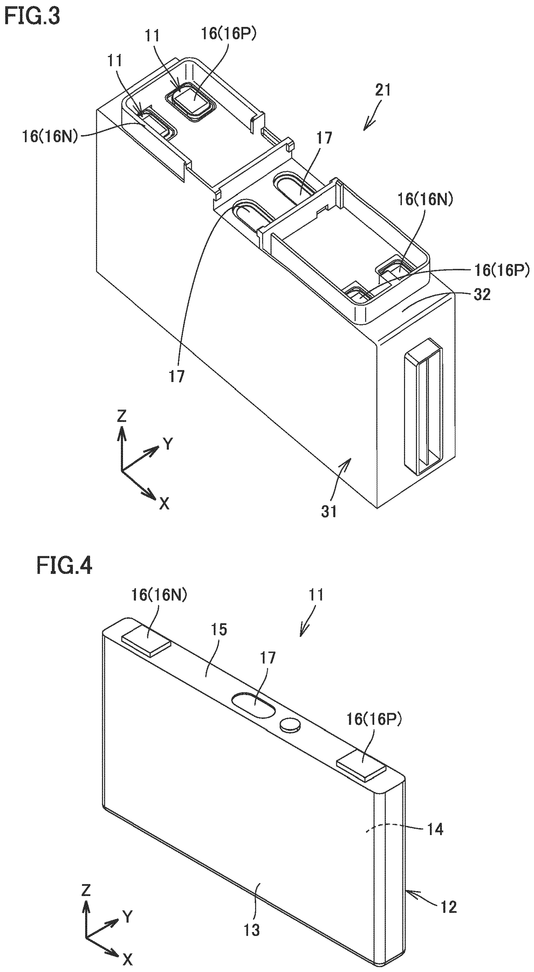

Fig. 1 is a perspective view showing a battery module according to an embodiment of the present invention. Fig. 2 is an exploded assembly diagram showing the battery module in Fig. 1. Fig. 3 is a perspective view showing a battery cell unit included in the battery module in Fig. 1. Fig. 4 is a perspective view showing a battery cell included in the battery cell unit in Fig. 1.

Referring to Figs. 1 to 4, a battery module 1 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 1, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 1 is mounted on a vehicle in such a posture that the +Z axis direction corresponds to the upward direction and the -Z axis direction corresponds to the downward direction.

First, an overall structure of battery module 1 will be described. As shown in Fig. 2, battery module 1 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 1 is not particularly limited as long as two or more battery cell units 21 are included.

As shown in Figs. 3 and 4, each of battery cell units 21, i.e., each of battery cell units 21A to 21F includes a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. As an example, battery cell 11 can have an output density of 8000 W/L or more. Battery cell 11 has a prismatic shape. More specifically, battery cell 11 has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 1.

Battery cell 11 further has electrode terminals 16 including a pair of a positive electrode terminal 16P and a negative electrode terminal 16N. Electrode terminals 16 are provided on cell top surface 15. Positive electrode terminal 16P and negative electrode terminal 16N are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 2 and 3, the plurality of battery cells 11 are stacked in the Y axis direction (first direction) across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16P and negative electrode terminals 16N are alternately arranged in the Y axis direction in which the plurality of battery cells 11 are stacked. Positive electrode terminal 16P and negative electrode terminal 16N adjacent to each other in the Y axis direction are connected to each other by a bus bar (not shown). Thus, the plurality of battery cells 11 are electrically connected together in series.

As shown in Figs. 1 and 2, battery module 1 further has a pair of end plates 42 (42P, 42Q) and a pair of binding bars 43 (restraint members). The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

The pair of binding bars 43 are disposed at both ends of the stack of battery cells 11 in the X axis direction (second direction). That is, the pair of bind bars 43 are provided to be arranged side by side with the plurality of battery cell units 21 and end plates 42 in the X axis direction. Each of binding bars 43 extends in the Y axis direction. An end portion of binding bar 43 in the -Y axis direction is connected to end plate 42P by a bolt 44. An end portion of binding bar 43 in the +Y axis direction is connected to end plate 42Q by a bolt 44. The pair of binding bars 43 and the pair of end plates 42 apply a restraint force in the Y axis direction onto the plurality of battery cells 11 (the plurality of battery cell units 21). It should be noted that a retainer may be further provided which extends in the X axis direction with the retainer intersecting a below-described duct 71 and which is connected to the pair of binding bars 43 at both end portions thereof.

Stud bolts 45 are attached to end plates 42. Battery module 1 is fixed to a supporting mechanism (such as a pack case) via stud bolts 45.

Battery module 1 further has duct 71 and a cover body 51.

Duct 71 is composed of a resin such as polybutylene terephthalate resin (PBT resin). Duct 71 extends in the Y axis direction with duct 71 facing the plurality of battery cells 11 (the plurality of battery cell units 21) in the Z axis direction (third direction). Duct 71 is an elongated body extending in the Y axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

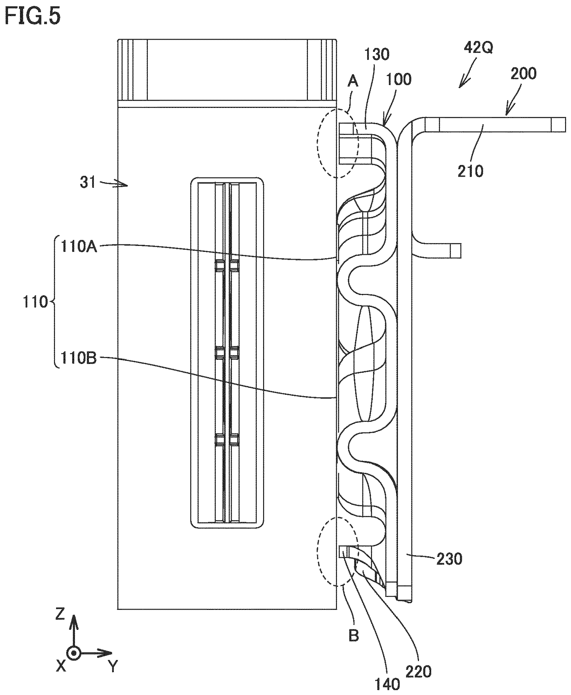

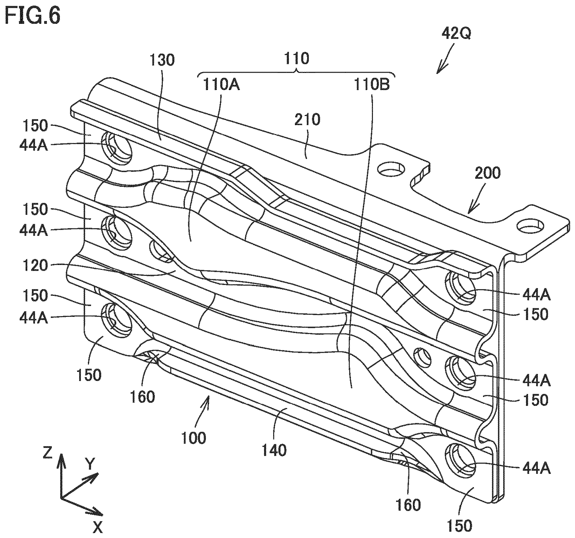

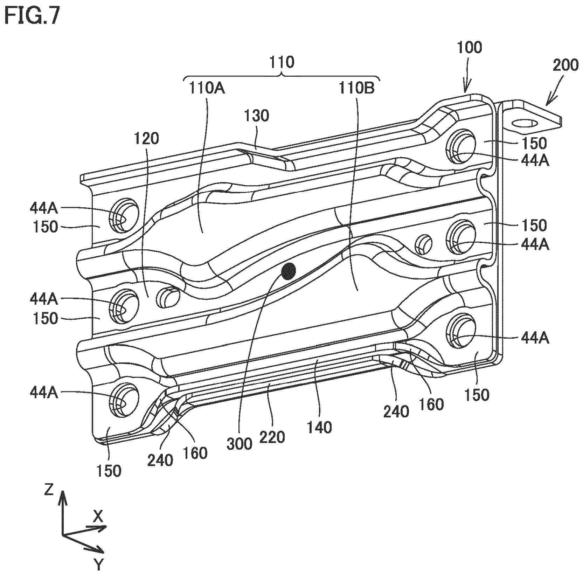

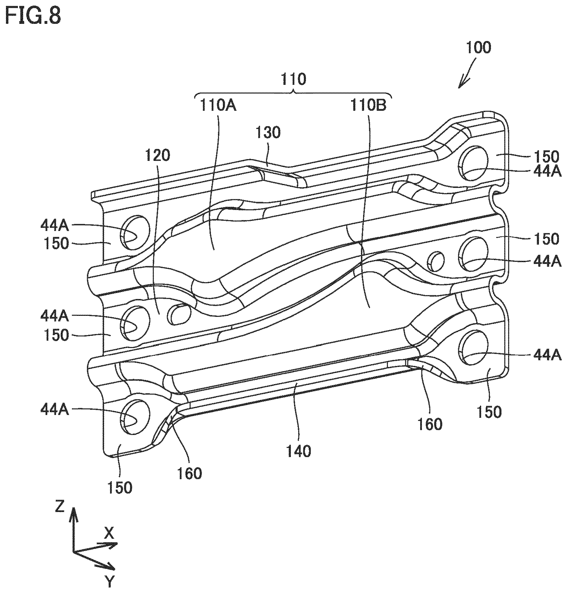

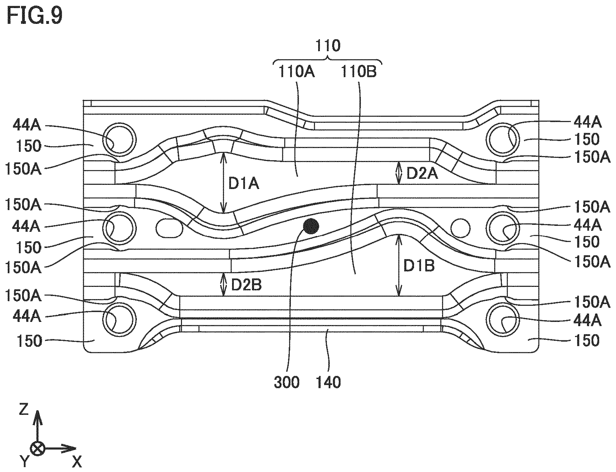

Fig. 5 is a side view showing surroundings around abutment portions between end plate 42Q and case body 31 of battery cell unit 21F. Each of Figs. 6 and 7 is a perspective view showing end plate 42Q. Fig. 8 is a perspective view showing a plate-shaped member 100 included in end plate 42Q. Fig. 9 is a front view showing plate-shaped member 100.

It should be noted that one end plate 42Q is shown in Figs. 5 to 9; however, the other end plate 42P has substantially the same structure as that of end plate 42Q.

Referring to Figs. 5 to 9, end plate 42Q is constituted of two plate-shaped members 100, 200. Plate-shaped member 100 has a wave shape including protrusions 110 and recesses 120. Protrusions 110 and recesses 120 are formed by a bending process to provide a continuous, curved surface with no angular portion. As shown in Fig. 5, protrusions 110 constitute abutment portions 110A, 110B that are each in abutment with case body 31.

Plate-shaped member 100 has flange portions 130, 140 each protruding to the case body 31 side along the Y axis direction. A clearance is formed between each of the tips of flange portions 130, 140 in the Y axis direction and case body 31 (A and B in Fig. 5).

Plate-shaped member 200 has: a flange portion 210 protruding opposite to case body 31 along the Y axis direction; and a flange portion 220 protruding to the case body 31 side. A clearance is formed between the tip of flange portion 220 in the Y axis direction and case body 31 (B in Fig. 5).

In plate-shaped member 100, the plurality of protrusions 110 and the plurality of recesses 120 are alternately formed to be arranged side by side in the Z axis direction. That is, each of abutment portions 110A, 110B and each of recesses 120 are formed to adjacent to each other along the Z axis direction. Each of protrusions 110 and recesses 120 is formed to extend in the X axis direction. In each of the plurality of recesses 120 (three in the example of Figs. 5 to 9), a flat surface portion 150 is formed. Fastening holes 44A (fastening portions) extending through plate-shaped members 100, 200 are formed at flat surface portions 150 located at the both end portions of end plate 42Q in the X axis direction. Bolts 44 for fastening end plate 42Q to binding bar 43 are inserted into fastening holes 44A.

Respective flange portions 140, 220 of plate-shaped members 100, 200 are provided only at the center portion of end plate 42Q in the X axis direction, and are not provided at the both end portions of end plate 42Q in the X axis direction. Hence, at the both end portions of end plate 42Q in the X axis direction, flat surface portions 150, 230 extend to the lower end portions (tips in the -Z axis direction) of plate-shaped members 100, 200.

Between flange portion 140 and flat surface portion 150 each located at the lower end portion of plate-shaped member 100, a transition portion 160 is provided to continuously transition from flat surface portion 150 to flange portion 140. Transition portion 160 is adjacent to flat surface portion 150 located at the lower end portion of plate-shaped member 100. Transition portion 160 is formed by performing a twisting process (twist-bending process) onto plate-shaped member 100. Therefore, the transition is made to provide plate-shaped member 100 with a curved surface that has no angular portion and that is continuous from each of flat surface portions 150 on the both end sides of end plate 42Q in the X axis direction to flange portion 140 on the center side of end plate 42Q in the X axis direction. Flat surface portion 150, transition portion 160, and flange portion 140 each located at the lower end portion of plate-shaped member 100 are arranged side by side in the X axis direction (second direction).

Similarly, between flange portion 220 and flat surface portion 230 each located at the lower end portion of plate-shaped member 200, a transition portion 240 is provided to continuously transition from flat surface portion 230 to flange portion 220. Transition portion 240 is adjacent to flat surface portion 230 located at the lower end portion of plate-shaped member 200. Transition portion 240 is formed by performing a twisting process (twist-bending process) onto plate-shaped member 200. Therefore, the transition is made to provide plate-shaped member 200 with a curved surface that has no angular portion and that is continuous from each of flat surface portions 230 on the both end sides of end plate 42Q in the X axis direction to flange portion 220 on the center side of end plate 42Q in the X axis direction. Flat surface portion 230, transition portion 240, and flange portion 220 each located at the lower end portion of plate-shaped member 100 are arranged side by side in the X axis direction (second direction).

Flange portion 140 of plate-shaped member 100 and flange portion 220 of plate-shaped member 200 are formed to be arranged side by side in the Z axis direction. Flange portion 140 is located on the +Z axis direction side with respect to flange portion 220.

Each of the widths of abutment portions 110A, 110B extending in the X axis direction is changed along the X axis direction, and abutment portions 110A, 110B have portions wide in width (D1A, D1B) and portions narrow in width (D2A, D2B). As shown in Fig. 9, each of the widths of abutment portions 110A, 110B is continuously and smoothly changed (in the form of a curve) between each portion wide in width and each portion narrow in width.

Stud bolts 45 are attached to end plate 42Q (plate-shaped member 200) on sides opposite to the portions wide in width (D1A, D1B) shown in Fig. 9. This leads to improved supporting strength for battery module 1.

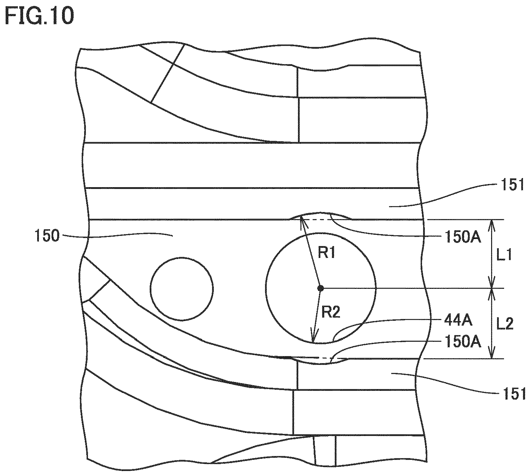

Fig. 10 is an enlarged view of surroundings around fastening hole 44A. As shown in Fig. 10, fastening hole 44A is formed in flat surface portion 150 (first portion) constituting the bottom surface of recess 120. Each of unevenness-processed portions 151 (second portion) having been through a process for forming the uneven shape of plate-shaped member 100 is located adjacent to flat surface portion 150. A pressing process for forming a flat surface continuous to flat surface portion 150 has been performed in a range of a radius R1 (> a radius R2 of fastening hole 44A) from the center of fastening hole 44A. The pressing process has been performed to a region overlapping with unevenness-processed portion 151 when viewed in the Y axis direction. Thus, pressing-processed portions 150A are formed to expand flat surface portion 150, thereby securing an installation space for a nut to be fastened to bolt 44 while attaining the size reduction of end plate 42Q.

In the example of Fig. 10, a distance (L1, L2) from the center of fastening hole 44A to each of unevenness-processed portions 151 (interference region) is about 5.2 mm or more and 5.6 mm or less, whereas the pressing process is performed to the region in the range of the radius (R1) of about 6 mm or more and 7 mm or less. Thus, flat surface portion 150 is expanded, with the result that an M6 nut can be securely installed. It should be noted that in the present technology, the size of the region subjected to the pressing process is not limited to the above-described numerical range.

The shape of the region subjected to the pressing process is not limited to the substantially circular shape, and the pressing process may be performed to a region having a substantially elliptical shape or a substantially polygonal shape, for example.

Plate-shaped members 100, 200 may be spot-welded together at a spot welding portion 300. Pressing-processed portion 150A that expands flat surface portion 150 is not limited to being formed around fastening hole 44A, and may be formed around spot welding portion 300, for example.

In battery module 1 according to the embodiment of the present technology, the strength of end plate 42Q can be improved by forming plate-shaped member 100 included in end plate 42Q into the wave shape including protrusions 110 and recesses 120.

Here, as shown in Fig. 10, since the pressing process has been performed to expand flat surface portion 150 of plate-shaped member 100 included in end plate 42Q, an installation space for a nut to be fastened to bolt 44 can be secured without sacrificing the strength of end plate 42Q, thereby attaining the size reduction of battery module 1 while avoiding the restriction in space.

Moreover, the strength of end plate 42Q can be further improved by providing flange portions 130, 140, 210, 220 protruding along the Y axis direction from the upper and lower end portions (the upper and lower end portions in the Z axis direction) of plate-shaped members 100, 200.

Further, since flat surface portions 150, 230 extend to the lower end portions of plate-shaped members 100, 200 without providing flange portions 140, 220 at the lower end portions in the both end portions of end plate 42Q in the X axis direction, the areas of flat surface portions 150, 230 can be secured while suppressing increased heights of plate-shaped members 100, 200 in the Z axis direction, with the result that the size reduction of end plate 42Q is avoided from being inhibited.

Thus, in battery module 1, flange portions 140, 220 (the center portion in the X axis direction) and flat surface portions 150, 230 (the both end portions in the X axis direction) are provided at the lower end portions of plate-shaped members 100, 200. This causes formation of respective boundary portions between flange portions 140, 220 and flat surface portions 150, 230. Since transition portions 160, 240 are provided at these boundary portions to continuously transition from flat surface portions 150, 230 to flange portions 140, 220, an angular portion that causes excessive stress concentration can be avoided from being formed in each of plate-shaped members 100, 200, with the result that flange portions 140, 220 can be connected to flat surface portions 150, 230 respectively without impairing the strength of end plate 42Q.

As a result, it is possible to attain the size reduction of battery module 1 (particularly, suppression of increased size in the Z axis direction) while maintaining the strength of end plate 42Q.

Further, in battery module 1, by forming battery cell units 21 that each accommodate the plurality of battery cells 11 in case body 31 with the plurality of battery cells 11 being arranged side by side in the Y axis direction and by forming battery module 1 by arranging the plurality of battery cell units 21 side by side in the Y axis direction, a manufacturing process can be simplified as compared with a case where battery module 1 is manufactured based on each of the plurality of battery cells 11 as one unit.

In battery module 1, by forming battery cell units 21 that each accommodate the plurality of battery cells 11 in case body 31, battery module 1 can be readily disassembled or replaced based on each battery cell unit 21 as a unit.

In battery module 1, by forming battery cell units 21 that each accommodate the plurality of battery cells 11 in case body 31, battery module 1 can be divided based on each battery cell unit 21 as one unit in order to lower the voltage to be handled when discarding battery module 1. Therefore, battery module 1 can be readily discarded.

In battery module 1, since two or more battery cells 11 are included in one unit and each of two or more battery cells 11 is set to have an output density of about 8000 W/L or more, a power supply device having a predetermined voltage or higher can be formed based on each unit.

## Claims

1. A battery module comprising:
a stack including a plurality of battery cells (11) arranged side by side in a first direction, each of the plurality of battery cells (11) having a prismatic shape;
an end plate (42) provided to be arranged side by side with the plurality of battery cells (11) in the first direction; and
a restraint member (43) that restrains the plurality of battery cells (11) and the end plate (42) along the first direction, the restraint member (43) being provided to be arranged side by side with the plurality of battery cells (11) and the end plate (42) in a second direction orthogonal to the first direction, wherein
the end plate (42) includes a plate-shaped member (100),
the plate-shaped member (100) has an uneven shape including an abutment portion (110A, 110B) and a recess (120), the abutment portion (110A, 110B) being in abutment with the stack in the first direction, the recess (120) being located in a direction away from the stack with respect to the abutment portion (110A, 110B), and
the recess (120) includes a first portion (150) and a second portion (151), the first portion (150) having a flat surface shape, the first portion (150) constituting a bottom surface of the recess (120), the second portion (151) having been through a process for forming the uneven shape, **characterized in that**
a pressing process has been performed onto the plate-shaped member (100) at a region overlapping with the second portion (151) having been through the process for forming the uneven shape when viewed in the first direction so as to form a pressing-processed portion (150A) continuous to the first portion (150) and expanding the first portion (150).

2. The battery module according to claim 1, wherein the end plate (42) includes a fastening portion (44A) that is provided in the first portion (150) and that is fastened to the restraint member (43).

3. The battery module according to claim 2, wherein the fastening portion (44A) is provided to be located at each of both end portions of the end plate (42) in the second direction.

4. The battery module according to any one of claims 1 to 3, wherein the abutment portion (110A, 110B) and the recess (120) are formed to each extend in the second direction and to be adjacent to each other along a third direction orthogonal to the first direction and the second direction.

5. The battery module according to claim 4, wherein each of widths of the abutment portion (110A, 110B) and the recess (120) in the third direction is changed along the second direction, and the pressing process has been performed onto the abutment portion (110A, 110B) at a portion having a relatively narrow width in the third direction.

6. The battery module according to any one of claims 1 to 5, further comprising a case (31) that accommodates the plurality of battery cells (11), that supports the plurality of battery cells (11) in at least the first direction, and that forms a unit (21) including the plurality of battery cells (11).

7. The battery module according to claim 6, wherein the unit (21) includes two or more battery cells (11), and each of the two or more battery cells (11) has an output density of 8000 W/L or more.

## Patentansprüche

1. Batteriemodul, aufweisend:
einen Stapel, der eine Mehrzahl an Batteriezellen (11) beinhaltet, die nebeneinander in einer ersten Richtung angeordnet sind, wobei jede von der Mehrzahl an Batteriezellen (11) eine prismatische Form aufweist;
eine Endplatte (42), die so angebracht ist, dass sie neben der Mehrzahl an Batteriezellen (11) in der ersten Richtung angeordnet ist; und
ein Halteelement (43), das die Mehrzahl an Batteriezellen (11) und die Endplatte (42) entlang der ersten Richtung hält, wobei das Halteelement (43) so angebracht ist, dass es neben der Mehrzahl an Batteriezellen (11) und der Endplatte (42) in einer zweiten Richtung angeordnet ist, die zu der ersten Richtung rechtwinklig ist, wobei
die Endplatte (42) ein plattenförmiges Element (100) beinhaltet,
das plattenförmige Element (100) eine unebene Form aufweist, die einen Anstoßabschnitt (110A, 110B) und eine Vertiefung (120) beinhaltet, wobei der Anstoßabschnitt (110A, 110B) an den Stapel in der ersten Richtung anstößt und die Vertiefung (120) sich in einer Richtung befindet, die von dem Stapel im Hinblick auf den Anstoßabschnitt (110A, 110B) entfernt ist, und
die Vertiefung (120) einen ersten Abschnitt (150) und einen zweiten Abschnitt (151) beinhaltet, wobei der erste Abschnitt (150) eine flache Oberflächenform aufweist und eine Bodenfläche der Vertiefung (120) darstellt, und der zweite Abschnitt (151) einen Vorgang zum Bilden der unebenen Form durchlaufen hat, **dadurch gekennzeichnet, dass**
ein Pressvorgang bei dem plattenförmigen Element (100) an einem Bereich durchgeführt wurde, der sich mit dem zweiten Abschnitt (151) überlappt, der den Vorgang zum Bilden der unebenen Form durchlaufen hat, wenn eine Betrachtung in der ersten Richtung stattfindet, so dass ein pressverarbeiteter Abschnitt (150A) gebildet wird, der zu dem ersten Abschnitt (150) kontinuierlich ist und den ersten Abschnitt (150) erweitert.

2. Batteriemodul nach Anspruch 1, wobei die Endplatte (42) einen Befestigungsabschnitt (44A) beinhaltet, der sich in dem ersten Abschnitt (150) befindet und an dem Halteelement (43) befestigt ist.

3. Batteriemodul nach Anspruch 2, wobei der Befestigungsabschnitt (44A) so vorhanden ist, dass er sich an jeder der beiden Endabschnitte der Endplatte (42) in der zweiten Richtung befindet.

4. Batteriemodul nach einem der Ansprüche 1 bis 3, wobei der Anstoßabschnitt (110A, 110B) und die Vertiefung (120) so gebildet sind, dass sie jeweils in der zweiten Richtung verlaufen und entlang einer dritten Richtung nebeneinander liegen, die zu der ersten Richtung und der zweiten Richtung rechtwinklig ist.

5. Batteriemodul nach Anspruch 4, wobei jede der Breiten des Anstoßabschnitts (110A, 110B) und der Vertiefung (120) in der dritten Richtung entlang der zweiten Richtung geändert ist, und wobei der Pressvorgang bei dem Anstoßabschnitt (110A, 110B) an einem Abschnitt durchgeführt wurde, der eine relativ schmale Breite in der dritten Richtung aufweist.

6. Batteriemodul nach einem der Ansprüche 1 bis 5, ferner aufweisend ein Gehäuse (31), das die Mehrzahl an Batteriezellen (11) beherbergt, das die Mehrzahl an Batteriezellen (11) in zumindest der ersten Richtung trägt, und das eine Einheit (21) bildet, die die Mehrzahl an Batteriezellen (11) beinhaltet.

7. Batteriemodul nach Anspruch 6, wobei die Einheit (21) zwei oder mehr Batteriezellen (11) beinhaltet, und wobei die zwei oder mehr Batteriezellen (11) eine Leistungsdichte von 8000 W/L oder mehr aufweisen.

## Revendications

1. Un module de batterie comprenant :
une pile comprenant une pluralité de cellules de batterie (11) disposées côte à côte dans une première direction, chacune de la pluralité de cellules de batterie (11) ayant une forme prismatique ;
une plaque d'extrémité (42) prévue pour être disposée côte à côte avec la pluralité de cellules de batterie (11) dans la première direction ; et
un élément de retenue (43) qui retient la pluralité de cellules de batterie (11) et la plaque d'extrémité (42) le long de la première direction, l'élément de retenue (43) étant prévu pour être disposé côte à côte avec la pluralité de cellules de batterie (11) et la plaque d'extrémité (42) dans une deuxième direction orthogonale à la première direction, dans lequel
la plaque d'extrémité (42) comprend un élément en forme de plaque (100),
l'élément en forme de plaque (100) a une forme irrégulière comprenant une partie de butée (110A, 110B) et un renfoncement (120), la partie de butée (110A, 110B) étant en butée avec la pile dans la première direction, le renfoncement (120) étant situé dans une direction éloignée de la pile par rapport à la partie de butée (110A, 110B), et
le renfoncement (120) comprend une première partie (150) et une deuxième partie (151), la première partie (150) ayant une forme de surface plane, la première partie (150) constituant une surface inférieure du renfoncement (120), la deuxième partie (151) ayant été soumise à un processus de formation de la forme irrégulière, **caractérisé par le fait que**
un processus de pressage a été effectué sur l'élément en forme de plaque (100) dans une région chevauchant la deuxième partie (151) ayant été soumise au processus de formation de la forme irrégulière lorsqu'elle est vue dans la première direction, de manière à former une partie traitée par pressage (150A) continue à la première partie (150) et à étendre la première partie (150).

2. Le module de batterie selon la revendication 1, dans lequel la plaque d'extrémité (42) comprend une partie de fixation (44A) qui est prévue dans la première partie (150) et qui est fixée à l'élément de retenue (43).

3. Le module de batterie selon la revendication 2, dans lequel la partie de fixation (44A) est prévue pour être située à chacune des deux parties d'extrémité de la plaque d'extrémité (42) dans la deuxième direction.

4. Le module de batterie selon l'une des revendications 1 à 3, dans lequel la partie de butée (110A, 110B) et le renfoncement (120) sont formés pour s'étendre chacun dans la deuxième direction et pour être adjacents l'un à l'autre le long d'une troisième direction orthogonale à la première direction et à la deuxième direction.

5. Le module de batterie selon la revendication 4, dans lequel chacune des largeurs de la partie de butée (110A, 110B) et du renfoncement (120) dans la troisième direction est modifiée le long de la deuxième direction, et le processus de pressage a été effectué sur la partie de butée (110A, 110B) à une partie ayant une largeur relativement étroite dans la troisième direction.

6. Le module de batterie selon l'une des revendications 1 à 5, comprenant en outre un boîtier (31) qui accueille la pluralité de cellules de batterie (11), qui supporte la pluralité de cellules de batterie (11) dans au moins la première direction, et qui forme une unité (21) comprenant la pluralité de cellules de batterie (11).

7. Le module de batterie selon la revendication 6, dans lequel l'unité (21) comprend deux cellules de batterie (11) ou plus, et chacune des deux cellules de batterie (11) ou plus a une densité de sortie de 8000 W/L ou plus.
